# EUROPEAN PATENT SPECIFICATION

(11) **EP 3 413 161 B1**
(45) Date of publication and mention of the grant of the patent: **06.04.2022**
(21) Application number: 17174558.1
(22) Date of filing: 06.06.2017
(51) Int. Cl.: G06F 1/26, G06F 1/32, G06F 1/3212, G06F 1/3293

(54) **ELECTRONIC DEVICE AND METHOD OF OPERATING AN ELECTRONIC DEVICE**
ELEKTRONISCHE VORRICHTUNG UND VERFAHREN FÜR DEN BETRIEB EINER ELEKTRONISCHEN VORRICHTUNG
DISPOSITIF ÉLECTRONIQUE ET PROCÉDÉ DE FONCTIONNEMENT DUDIT DISPOSITIF

(43) Date of publication of application: 12.12.2018
(73) Proprietor: Vestel Elektronik Sanayi ve Ticaret A.S., 45030 Manisa (TR); Özyegin University, 34794 Istanbul (TR)
(72) Inventor: GULBAHAR, Burhan, 45030 Manisa (TR); MEMISOGLU, Gorkem, 45030 Manisa (TR)
(74) Representative: Flint, Adam

(56) References cited:
- US-A1- 2010 124 896
- US-A1- 2015 207 361
- US-A1- 2015 303 735

## Description

### Technical Field

The present disclosure relates to an electronic device and a method of operating an electronic device.

### Background

Electronic devices have become ubiquitous in modern society; many people own at least one personal electronic device such as a smartphones, tablet, laptop etc. Portable electronic devices are often equipped with an internal power supply (e.g. a battery) which requires charging from time to time. This is usually carried out by using a charging cable to connect the electronic device to a mains outlet. It can be a problem for the user when the battery becomes discharged.

US2015207361A1 discloses an apparatus and method for changing an operation status of an electronic device.

### Summary

The invention is defined by the appended independent claims.

According to a first aspect disclosed herein, there is provided a method of operating an electronic device according to claim 1. According to a second aspect disclosed herein, there is provided an electronic device according to claim 6. According to a third aspect disclosed herein, there is provided a computer program product according to claim 9. Further aspects disclosed herein are specified in the dependent claims.

### Brief Description of the Drawings

To assist understanding of the present disclosure and to show how embodiments may be put into effect, reference is made by way of example to the accompanying drawings in which:
Figure 1 shows schematically an electronic device;
Figure 2 shows schematically an example of an electronic device according to the present disclosure;
Figure 3 shows an example of an apparatus installed at a building for generating electric current in accordance with the present disclosure; and
Figure 4 shows a section of the apparatus of Figure 3 in more detail.

### Detailed Description

When the internal rechargeable battery of an electronic device (such as a smartphone, tablet computer, etc.) runs out and can no longer provide sufficient current to power the device, an internal processor of the device is not able to execute processing tasks. A user of the device may find himself in the middle of one or more important tasks when the internal battery of the device runs out. This may be annoying (e.g. if the user is unable to access information such as a boarding pass on their smartphone) or even dangerous (e.g. if the user is unable to use their mobile phone to make an emergency call or to transmit their location to emergency services or a friend). Charging the internal battery may not always be possible (due to lack of time, or a power socket, charging cable etc.).

In examples described herein, tasks to be executed on the electronic device are stored to a memory during normal operation. When power is received from a secondary power source, the electronic device retrieves the stored tasks and completes them. This allows the user of the device to complete the tasks by simply activating the secondary power source. The secondary power source may be considered a "backup" power source.

The memory is a non-volatile memory and the tasks stored therein are maintained even after the internal battery discharges. In these cases, the user is able to complete tasks by activating the secondary power source even after the internal battery discharges.

The secondary (backup) power source may be an internal coil for generating current through electromagnetic induction. Hence, the user is then able to have the electronic device execute these tasks by simply moving the electronic device through a magnetic field, even if the internal battery is discharged. For example, a vertical shaft lined with magnets may be installed in a building through which users are able to drop their phones in order to perform the tasks (preferably with a soft landing at the base provided by a cushion and/or spring mechanism or the like).

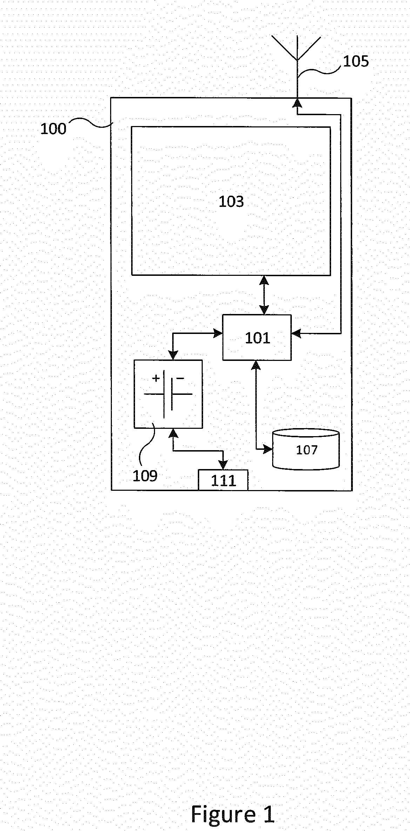

Figure 1 shows an example of an existing electronic device 100, the type of which has become very widespread in both availability to and uptake by consumers. The electronic device 100 comprises a processor 101, a user interface 103, a communication interface 105, a memory 107, an internal power supply 109, and a charging port 111. The electronic device 100 is shown in Figure 1 as a smartphone 100, but may be any other electronic device equipped with a processor for performing processing tasks, such as a laptop, or other computing device. Similarly, it is understood that real electronic devices comprise many more components, and that only the main components are shown in Figure 1 for the sake of simplicity. The processor 101 is connected to each of the user interface 103, communication interface 105, memory 107, and power supply 109, by one or more wired connections for transferring power and/or data in the form of electrical signals. The power supply 109 is also connected to the charging port 111 by one or more wired connections for transferring at least power and optionally data between the charging port 111 and the power supply 109.

The user interface 103 is shown as a touch-screen graphical user interface 103 in Figure 1 but may be any other suitable user input device such as a microphone and/or physical keyboard. In any case, a user of the electronic device 100 is able to use the user interface 103 to provide input to the electronic device 100. These inputs are received by the processor 101 for processing, as known in the art and so only described briefly (below), in order that the user may control the functioning of the electronic device 100.

The communications interface 105 comprises one or more wired and/or wireless interfaces to provide at least one wired or wireless connection such as WiFi, BlueTooth, Ethernet, ZigBee, or cellular connection (e.g. 2G, 3G, 4G etc.) as known in the art. The communications interface 105 generally provides for both transmission and reception of data signals (i.e. the communications interface 105 is a transceiver) but it is not excluded that, when the communications interface 105 comprises multiple interfaces, separate interfaces provide for transmission (a transmitter) and reception (a receiver) of signals.

The memory 107 is an internal memory of the electronic device 100 and comprises one or more computer storage units such as one or more RAM or ROM devices such as solid-state memories, hard drives etc. The memory 107 is a non-volatile memory which retains the data stored therein upon loss of power.

The processor 101 comprises one or more processing units, including for example one or more individual CPUs (central processing units) as known in the art and is operatively coupled to each of the user interface 103, communications interface 105, and memory 107 by the one or more wired connections as mentioned above. Hence, the processor 101 is arranged in operation to receive data from and send data to each of the user interface 103, communications interface 105, and memory 107, for example, to perform read and write operations from and to the memory 107.

The electronic device 100 is normally powered by the internal power source 109 which provides power to the processor 101, user interface 103, communications interface 103, and memory 107 as required. The internal power source 109 comprises one or more internal rechargeable batteries. These may be, for example, lithium-ion batteries. The internal battery 109 may be charged using the charging port 111 (i.e. by the user connecting a charging cable to the charging port 111 in order to connect the electronic device to an external e.g. mains power supply.), or by a wireless charging mechanism, as known in the art.

As mentioned above, electronic devices such as electronic device 100 shown in Figure 1 have become widespread and many users use a personal mobile phone every day. This comprises the user charging the battery 109 using for example the charging port 111, interacting with the phone 100 through the user interface 103 (or user interface devices) to provide input to and receive output from the processor 101, and sending and receiving data via the communications interface 105. For example, the user is able to compose a text message on a touchscreen providing a graphical user interface 103 to be sent over the Internet via for example a cellular or WiFi connection provided by communications interface 105. This is all very well known in the art and so not described in more detail here.

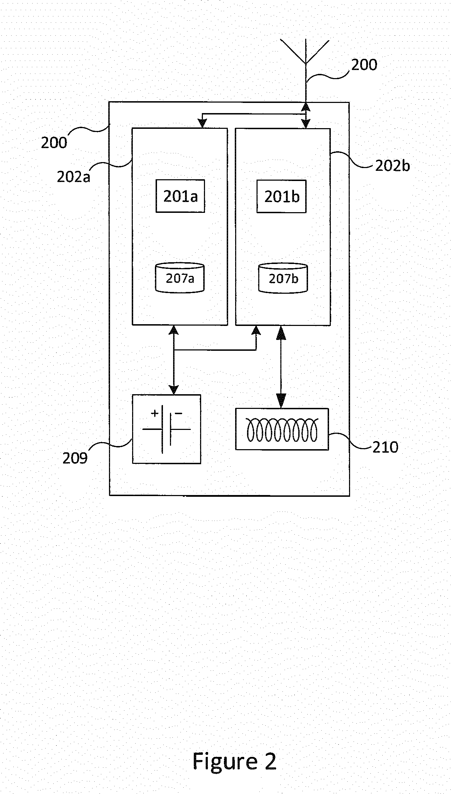

Figure 2 shows an electronic device 200 in accordance with examples of the present invention. The electronic device 200 may be any type of electronic device, such as a mobile phone, laptop, PDA etc. but is shown as a smartphone 200 in Figure 200 for the purposes of explanation.

The smartphone 200 comprises a first processing module (processor-memory pair) 202a, a second processing module (processor-memory pair) 202b, a communications interface 205, a battery 209, and a secondary (backup) power source 210. The smartphone 200 may comprise more components than shown, for example a user interface such as a graphical touch-screen interface.

The battery 209 comprises one or more internal rechargeable batteries. These may be, for example, lithium-ion batteries. An internal battery may be charged using a charging port (not shown in Figure 2) by the user connecting a charging cable to the charging port 111 in order to connect the electronic device to an external e.g. mains power supply., or by a wireless charging mechanism.

The communications interface 205 comprises one or more wired and/or wireless interfaces to provide at least one wired or wireless connection such as WiFi, BlueTooth, Ethernet, ZigBee, or cellular connection (e.g. 2G, 3G, 4G etc.). The communications interface 205 may provide for both transmission and reception of data signals (i.e. the communications interface 205 is a transceiver) but it is not excluded that, when the communications interface 205 comprises multiple interfaces, separate interfaces provide for transmission (a transmitter) and reception (a receiver) of signals.

The first memory 207a comprises one or more computer storage units such as one or more RAM or ROM devices such as solid-state memories, hard drives etc. The first memory 207a is used by the first processor 201a during normal functioning of the device when the battery 209 is charged.

Similarly, the second memory 207b comprises one or more computer storage units such as one or more RAM or ROM devices such as solid-state memories, hard drives etc. The second memory 207b is a non-volatile memory which retains the data stored therein upon loss of power.

The first processor 201a comprises one or more processing units such as one or more individual CPUs as known in the art and is operatively coupled to at least communications interface 205, first memory 207a, second memory 207b, and battery 209 by the one or more wired connections as mentioned above.

Similarly, the second processor 201b comprises one or more processing units such as one or more individual CPUs as known in the art. The second processor 201b is operatively coupled to at least second memory 207b, and secondary power source 210 by the one or more wired connections.

The processing modules 202a, 202b are shown as distinct processor-memory pairs, that is, the first pair 202a is formed of first processor 201a and first memory 207a and the second pair is formed of second processor 201b and second memory 207b. However, these are functional blocks for the purposes of understanding only; in practice, operations attributed herein to the separate processors 201a and 201b could be performed by a single processor, and likewise the functionality of memories 207a and 207b could be performed by a single memory unit. For example, memories 207a and 207b could be implemented as separate memory locations on the same physical electronic storage unit. So, in some examples, there may be for example a single processor but two separate memories. For convenience and simplicity for the present description, the processing modules 202a, 202b are shown separately in Figure 2 and may, for example, represent two separate printed circuit boards (PCBs) 202a, 202b each comprising a processor and a memory.

Both the first PCB 202a and second PCB 202b are connected to the battery 209 and configured to be powered by electrical current from the battery. Only the second PCB 202b is connected to the secondary power source 210 and configured to be powered by electrical current therefrom. Both the first PCB 202a and second PCB 202b are connected to the communications interface 205 and thereby enabled for wired and/or wireless communications.

Processor 201a may be considered the "main" or "primary" processor in that it is configured to perform computations in dependence on user input received from a user interface (not shown in Figure 2) and communications interface 205 in a manner well known in the art. The first processor 201a has access to the first memory 207a for use in performing these tasks, i.e. the first processor 201a is configured to store and retrieve data from memory 207a during normal operation of the smartphone 200. Similarly, the first PCB 202a may be considered the "main" or "primary" PCB in that it comprises the main processor 201a and an associated "main" memory 207a.

The second PCB 201b may be considered an "emergency" or "backup" PCB (comprising a "backup" processor 201b and "backup memory" 207b). The second PCB 201b is lower power than the main PCB 202a (i.e. requires less electrical power in order to operate). This may be achieved using a lower power processor and/or memory.

In operation, the first processing module 202a performs the normal functionality of the smartphone 202 by the processor 201 processing various processing tasks which herein refers to any computation of data to be performed by a processor in cooperation with any input device, output device, memory etc. and therefore covers both low-level tasks such as individual mathematical or logical operations on a CPU of the processor and high-level tasks such saving a document or sending a message.

Tasks may be queued on the first PCB 202a, i.e. stored in memory 207a (which may represent a register of processor 201a) for execution by the first processor 201a. Data relating to one or more of these tasks is stored in (e.g. copied to) the second memory 207b. That is, the second PCB 202b may in effect replicate and copy tasks from the first PCB 202a, for example caching some important data to send via communication interface 205. This is represented in Figure 2 as a dotted arrow. Note that the first processor 201a need only be capable of writing to memory 207b; it does not need to be able to read from memory 207b like processor 201b does (see below).

A task may in general be, for example, sending and/or receiving a message (such as an SMS or MMS message or the like over a cellular network or over the Internet), sending and/or receiving an email, saving a file (such as an email, document, picture, etc.), or any other task the user may perform on the smartphone 200 such as viewing files, browsing the Internet, etc. The arrangement may be such that only data relating to "important" tasks is stored in (e.g. copied to) the second memory 207b. "Important" tasks may be for example one or more of sending and/or receiving a message or an email say. What constitutes an "important" task that is copied to the second memory 207b may be set by for example the user as a user-defined option or set once by the manufacturer of the device 200.

The second processor 201b can access the second memory 207b storing these tasks and therefore the second PCB 202b is enabled to perform the tasks upon a criterion being met. The criterion for the second PCB 202b performing the tasks is electrical power being received from the secondary power source 210. Once the secondary power source 210 is activated, the second PCB 202b receives power from the secondary power source 210 and, in response thereto, executes one or more of the stored task(s). That is, the second processor 201b retrieves the data stored in the second memory 207b in response to receiving electrical power from the secondary power source 210 and executes one or more of the task(s).

The second PCB 202b is configured to perform the conditional execution of the stored tasks at least when the charge level of battery 209 falls below a predetermined charge level (e.g. 1% or 2% of maximum charge or so). For example, the second PCB 202b can be configured to only perform these steps when the battery 209 is fully discharged (i.e. when the charge level of the battery 209 is 0% of maximum charge, or at least low enough that the electronic device 200 is no longer able to boot). That is, the threshold charge level triggering the second PCB 202b is preferably set to be equal to a minimum charge level required by the first PCB 202a to function (i.e. the charge level at which the first PCB 202a powers down).

Hence, in this example, the second PCB 202b will not fetch the tasks from memory 207b and execute them immediately upon the battery 209 discharging, but will execute them at a later point in time when the secondary power source 210 generates power. The advantage of this is that the "leftover" tasks will be stored in (non-volatile) memory 207b indefinitely, and so if the user wishes to complete the tasks (e.g. if the user was in the middle of sending a message when the battery 209 ran out) then the user can do so by simply enabling the secondary power source 210. This is quicker than charging the battery 209 to complete the tasks as it does not require the entire phone 200 to be turned back on (i.e. rebooting the entire operating system).

The secondary power source 210 may comprise any suitable source of electric current which is capable of providing sufficient power to the second PCB 202b for long enough for the second processor 201b to fetch and execute one or more of the stored tasks. Note that this power source does not need to be sufficiently powerful to power the entire phone 200. For example, the secondary power source 210 may be a wind-up power supply comprising an electromagnetic dynamo which the user can activate using a handle.

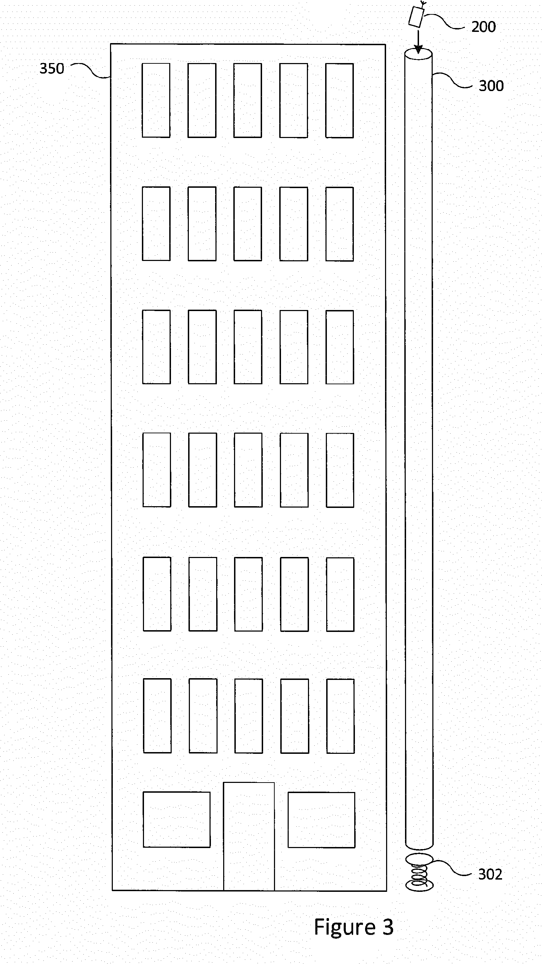

The secondary power source 210 comprises a coil of wire for generating an electric current when it (by way of the entire electronic device 200) is passed through a magnetic field. This is especially useful in combination with an apparatus 300 for charging the electronic device 200 comprising a plurality of magnets 310 arranged vertically as shown in Figure 3.

The apparatus 300 comprises a tall (e.g. more than ten metres, fifty metres, or one hundred metres in height) shaft composed of a hollow interior and an opening at the top through which the user's phone 200 may be dropped. The apparatus 300 may be installed on the side of a building 350 as shown in Figure 3, on the inside of a building 350 (not shown), may be installed on the exterior or interior of any other structure such as a sculpture, or may be free-standing. The apparatus 300 may be installed in conjunction with a device 302 for minimising damage to the phone 200 (i.e. a catching mechanism), such as a cushion or spring device or the like. This is particularly useful for examples in which the apparatus 300 is tall enough that an unacceptable level of damage to the phone may occur, as in the example of Figure 3 in which the apparatus may be fifty metres, one hundred metres, or even more, depending on the building 350.

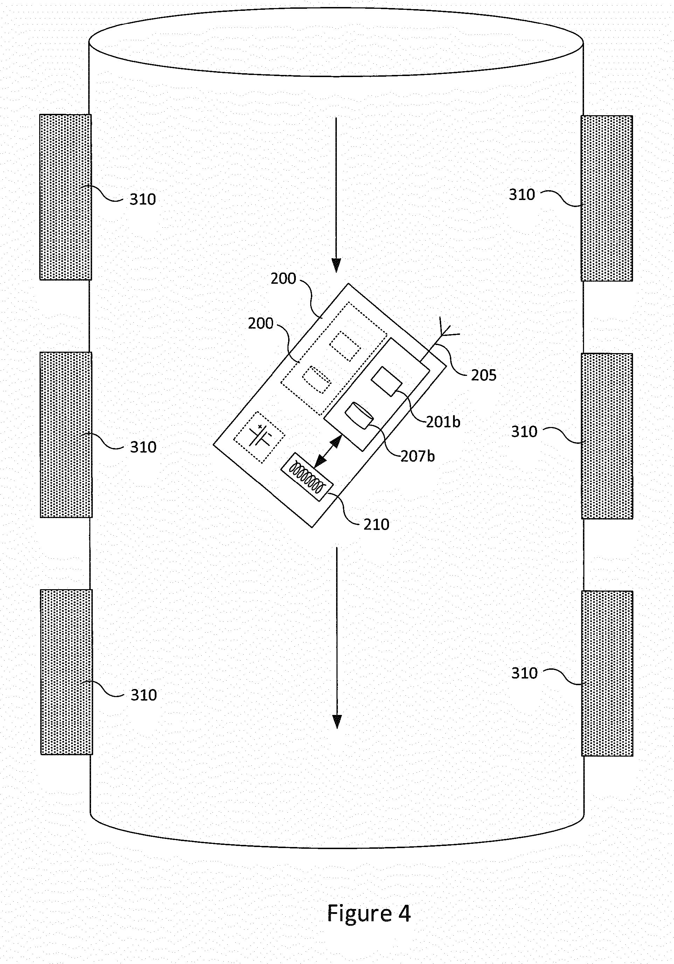

Figure 4 shows a close up of a section of the apparatus 300. As shown, a plurality of magnets 310 is disposed along the length of the apparatus 300. The magnets 310 may be on the exterior and/or interior of the shaft of the apparatus 300. What matters is that they create a magnetic field at the centre of the apparatus 300, or, in any case, wherever the phone 200 will fall when dropped through the shaft.

This example of the secondary power source 210 (comprising a coil 210 on the phone 200) being initiated by dropping the phone 200 through a "charging apparatus" 300 is particularly advantageous as it does not rely on any external power supply which other charging methods require (e.g. a mains power supply relies on power from the grid), and is simple and quick for the user to enact.

Hence, in these examples, when the user's phone 200 runs out of power in the middle an important task (e.g. sending or receiving a message or email or the like), the task will be saved to memory 207b, and the user can ensure this task gets completed by simply dropping his phone through the apparatus 300. As the phone 200 falls, the magnetic field from the magnets 310 induces a current in the coil 210, which (as described above) causes the second PCB 202b to "power up": the second processor 201b retrieves the task from memory 207b and executes it (the message is sent).

The apparatus 300 may be provided with an elevating apparatus for lifting the phone 200 to the top of the apparatus and dropping it. This saves the user needing to be at the top of the apparatus 300 or from having to travel to the top of the apparatus 300.

The apparatus 300 may be provided with additional openings at various different heights on the shaft, so that the user (and other users) may insert their phones into the shaft of the apparatus 300 from the various different heights. This has the advantage that a user does not need to travel all the way to the top of the apparatus 300 to perform the drop; he need only travel to the closest opening.

The damage-minimising device 302 is preferable, in that it increases the chances that the phone 200 will be functional after the drop, but is not essential. For example, in an emergency situation in which the user is in the middle of sending an SOS message when the battery 209 runs out, it may be sufficient that the SOS message is sent regardless of the state of the phone 200 afterwards - particularly when the user has no other means of charging the phone 200.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors and a digital signal processor or processors, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

## Claims

1. A method of operating an electronic device (200) comprising a first processor (202a), a second processor (202b), a non-volatile memory (207b), an internal battery (209) and an internal coil (210) for generating current through electromagnetic induction, wherein a power requirement of the second processor (202b) is lower than a power requirement of the first processor (202a), the method comprising:
when a charge level of the internal battery (209) is above a threshold charge level: executing, by the first processor (202a), a plurality of tasks; and storing, by the first processor (202a), data concerning at least one of the tasks to the non-volatile memory (207b);
when the charge level of the internal battery (209) is below the threshold charge level: in response to receiving electrical power from the internal coil (210): i) retrieving, by the second processor (202b), the data concerning the at least one task from the non-volatile memory (207b); and ii) executing, by the second processor (202b), the at least one task.

2. The method according to claim 1, wherein the electronic device (200) comprises a memory (207a) for use by the first processor (202a) when the charge level of the internal battery (209) is above the threshold charge level.

3. The method according to any preceding claim, wherein said at least one task comprises saving a file to an electronic storage device.

4. The method according to any preceding claim, wherein said at least one task comprises sending or receiving a message using a communications interface (205) of the electronic device (200).

5. The method according to any preceding claim, wherein the internal coil (210) is arranged to generate current upon the electronic device (200) being passed through a magnetic field provided by a plurality of magnets (310) disposed on a vertical structure (300), and wherein passing the electronic device (200) through the magnetic field comprises dropping the electronic device (200) through the vertical structure (300).

6. An electronic device (200) comprising:
a non-volatile memory (207b);
an internal battery (209) for powering the electronic device (200);
an internal coil (210) for generating current through electromagnetic induction;
a first processor (202a) configured to: when a charge level of the internal battery (209) is above a threshold charge level, execute a plurality of tasks and store data concerning at least one of the tasks to the non-volatile memory (207b); and
a second processor (202b) configured to: when the charge level of the internal battery (209) is below the threshold charge level, in response to receiving electrical power from the internal coil (210): i) retrieve the data concerning the at least one task from the non-volatile memory (207b); and ii) execute the at least one task;
wherein a power requirement of the second processor (202b) is lower than a power requirement of the first processor (202a).

7. The electronic device (200) according to claim 6, wherein the electronic device comprises a memory (207a) for use by the first processor (202a) when the charge level of the internal battery (209) is above the threshold charge level.

8. The electronic device (200) according to claim 6 or claim 7, further comprising a communications interface (205); and wherein the at least one task comprises transmitting data using the communications interface (205).

9. A computer program product comprising instructions to cause the electronic device of claim 6 to execute the method steps of any of claims 1 to 4.

## Patentansprüche

1. Betriebsverfahren einer elektronischen Vorrichtung (200) mit einem ersten Prozessor (202a), einem zweiten Prozessor (202b), einem nichtflüchtigen Speicher (207b), einer internen Batterie (209) und einer internen Spule (210) zum Stromerzeugen durch elektromagnetische Induktion, wobei ein Energiebedarf des zweiten Prozessors (202b) niedriger ist als ein Energiebedarf des ersten Prozessors (202a), wobei das Verfahren aufweist:
wenn ein Ladezustand der internen Batterie (209) über einem Grenzladezustand liegt: Ausführen mehrerer Aufgaben durch den ersten Prozessor (202a); und
Speichern von Daten bezüglich wenigstens einer der Aufgaben durch den ersten Prozessor (202a) in den nichtflüchtigen Speicher (207b);
wenn der Ladezustand der internen Batterie (209) unter dem Grenzladezustand liegt: als Reaktion auf ein Empfangen elektrischer Energie von der internen Spule (210): i) Abrufen der Daten bezüglich der wenigstens einen Aufgabe durch den zweiten Prozessor (202b) aus dem nichtflüchtigen Speicher (207b); und ii) Ausführen der wenigstens einen Aufgabe durch den zweiten Prozessor (202b).

2. Verfahren nach Anspruch 1, wobei die elektronische Vorrichtung (200) einen Speicher (207a) aufweist zur Verwendung durch den ersten Prozessor (202a), wenn der Ladezustand der internen Batterie (209) über dem Grenzladezustand liegt.

3. Verfahren nach einem der vorhergehenden Ansprüche, bei welchem die wenigstens eine Aufgabe ein Abspeichern einer Datei auf einer elektronischen Speichervorrichtung aufweist.

4. Verfahren nach einem der vorhergehenden Ansprüche, bei welchem die wenigstens eine Aufgabe ein Senden oder Empfangen einer Mitteilung unter Verwendung einer Kommunikationsschnittstelle (205) der elektronischen Vorrichtung (200) aufweist.

5. Verfahren nach einem der vorhergehenden Ansprüche, wobei die interne Spule (210) eingerichtet ist, um Strom auf der elektronischen Vorrichtung (200) zu erzeugen, die ein Magnetfeld durchläuft, das durch mehrere Magneten (310) vorgesehen wird, die auf einer Vertikalstruktur angeordnet sind, und wobei das Laufen der elektronischen Vorrichtung (200) durch das Magnetfeld ein Fallen der elektronischen Vorrichtung (200) durch die Vertikalstruktur (300) aufweist.

6. Elektronische Vorrichtung (200), aufweisend:
einen nichtflüchtigen Speicher (207b);
eine interne Batterie (209) zum Energieversorgen der elektronischen Vorrichtung (200);
eine interne Spule (210) zum Stromerzeugen durch elektromagnetische Induktion; einen ersten Prozessor (202a), der konfiguriert ist, um mehrere Aufgaben auszuführen und Daten bezüglich wenigstens einer der Aufgaben in den nichtflüchtigen Speicher (207b) zu speichern, wenn ein Ladezustand der internen Batterie (209) über einem Grenzladezustand liegt; und
einen zweiten Prozessor (202b), der konfiguriert ist, um, wenn der Ladezustand der internen Batterie (209) unter dem Grenzladezustand liegt, als Reaktion auf ein Empfangen elektrischer Energie von der internen Spule (210): i) die Daten bezüglich der wenigstens einen Aufgabe aus dem nichtflüchtigen Speicher (207b) abzurufen; und ii) die wenigstens eine Aufgabe auszuführen;
wobei ein Energiebedarf des zweiten Prozessors (202b) niedriger ist als ein Energiebedarf des ersten Prozessors (202a).

7. Elektronische Vorrichtung (200) nach Anspruch 6, wobei die elektronische Vorrichtung einen Speicher (207a) zur Verwendung durch den ersten Prozessor (202a), wenn der Ladezustand der internen Batterie über dem Grenzladezustand liegt, aufweist.

8. Elektronische Vorrichtung (200) nach Anspruch 6 oder Anspruch 7, ferner aufweisend eine Kommunikationsschnittstelle (205); und wobei die wenigstens eine Aufgabe ein Übertragen von Daten unter Verwendung der Kommunikationsschnittstelle aufweist.

9. Computerprogrammprodukt, das Anweisungen aufweist, um die elektronische Vorrichtung nach Anspruch 6 zu veranlassen, die Verfahrensschritte nach einem der Ansprüche 1 bis 4 auszuführen.

## Revendications

1. Procédé de fonctionnement d'un dispositif électronique (200) qui comprend un premier processeur (202a), un deuxième processeur (202b), une mémoire non volatile (207b), une batterie interne (209) et une bobine interne (210) qui est destinée à générer du courant par induction électromagnétique, dans lequel une exigence de puissance du deuxième processeur (202b) est inférieure à une exigence de puissance du premier processeur (202a), le procédé consistant à :
lorsqu'un niveau de charge de la batterie interne (209) est supérieur à un seuil de niveau de charge : exécuter, par le premier processeur (202a), une pluralité de tâches ; et stocker, par le premier processeur (202a), des données concernant au moins l'une des tâches dans la mémoire non volatile (207b) ;
lorsque le niveau de charge de la batterie interne (209) est inférieur au seuil de niveau de charge : en réponse à la réception de puissance électrique provenant de la bobine interne (210) : i) récupérer, par le deuxième processeur (202b), les données concernant ladite au moins une tâche de la mémoire non volatile (207b) ; et ii) exécuter, par le deuxième processeur (202b), ladite au moins une tâche.

2. Procédé selon la revendication 1, dans lequel le dispositif électronique (200) comprend une mémoire (207a) destinée à être utilisée par le premier processeur (202a) lorsque le niveau de charge de la batterie interne (209) est supérieur au seuil de niveau de charge.

3. Procédé selon l'une quelconque des revendications précédentes, dans lequel ladite au moins une tâche consiste à sauvegarder un fichier sur un dispositif de stockage électronique.

4. Procédé selon l'une quelconque des revendications précédentes, dans lequel ladite au moins une tâche consiste à envoyer ou recevoir un message en utilisant une interface de communication (205) du dispositif électronique (200).

5. Procédé selon l'une quelconque des revendications précédentes, dans lequel la bobine interne (210) est agencée de manière à générer du courant lorsque le dispositif électronique (200) passe à travers un champ magnétique fourni par une pluralité d'aimants (310) disposés sur une structure verticale (300), et dans lequel le passage du dispositif électronique (200) à travers le champ magnétique consiste à faire chuter le dispositif électronique (200) à travers la structure verticale (300).

6. Dispositif électronique (200) comprenant :
une mémoire non volatile (207b) ;
une batterie interne (209) destinée à alimenter le dispositif électronique (200) ;
une bobine interne (210) destinée à générer du courant par induction électromagnétique ;
un premier processeur (202a) configuré pour: lorsqu'un niveau de charge de la batterie interne (209) est supérieur à un seuil de niveau de charge, exécuter une pluralité de tâches et stocker des données concernant au moins l'une des tâches dans la mémoire non volatile (207b) ; et
un deuxième processeur (202b) configuré pour: lorsque le niveau de charge de la batterie interne (209) est inférieur au seuil de niveau de charge, en réponse à la réception de puissance électrique provenant de la bobine interne (210) : i) récupérer les données concernant ladite au moins une tâche de la mémoire non volatile (207b) ; et ii) exécuter ladite au moins une tâche ;
dans lequel une exigence de puissance du deuxième processeur (202b) est inférieure à une exigence de puissance du premier processeur (202a).

7. Dispositif électronique (200) selon la revendication 6, dans lequel le dispositif électronique comprend une mémoire (207a) destinée à être utilisée par le premier processeur (202a) lorsque le niveau de charge de la batterie interne (209) est supérieur au seuil de niveau de charge.

8. Dispositif électronique (200) selon la revendication 6 ou 7, comprenant en outre une interface de communication (205) ; et dans lequel ladite au moins une tâche consiste à transmettre des données en utilisant l'interface de communication (205).

9. Produit de programme informatique comprenant des instructions pour amener le dispositif électronique selon la revendication 6 à exécuter les étapes du procédé selon l'une quelconque des revendications 1 à 4.
